# FASCICULE DE BREVET EUROPEEN

(11) **EP 3 950 434 B1**
(45) Date de publication et mention de la délivrance du brevet: **18.01.2023**
(21) Numéro de dépôt: 21178218.0
(22) Date de dépôt: 08.06.2021
(51) Int. Cl.: B60R 13/02, B32B 29/08

(54) **ELÉMENT DE TOIT EN CARTON POUR VÉHICULE PRÉSENTANT UNE STABILITÉ DIMENSIONNELLE AMÉLIORÉE**
DACHELEMENT AUS KARTON FÜR FAHRZEUG MIT VERBESSERTER FORMSTABILITÄT
CARDBOARD ROOF ELEMENT FOR VEHICLE HAVING IMPROVED DIMENSIONAL STABILITY

(30) Priorité: 05.08.2020 FR 2008305
(43) Date de publication de la demande: 09.02.2022
(73) Titulaire: ADHEX TECHNOLOGIES, 21300 Chenôve (FR)
(72) Inventeur: DURAND, Hervé, 21000 DIJON (FR); JACSON, Vincent, 21600 LONGVIC (FR)
(74) Mandataire: Gevers & Orès

(56) Documents cités:
- EP-A1- 0 644 085
- EP-A2- 0 341 652
- US-A- 4 131 702
- US-A- 5 290 622

## Description

### DOMAINE TECHNIQUE

La présente invention concerne un élément de toit et en particulier un panneau intérieur de plafond pour un toit de véhicule, destiné notamment à améliorer la rigidité dudit toit et présentant une stabilité dimensionnelle améliorée.

### ÉTAT DE LA TECHNIQUE

On connaît dans le domaine de l'automobile, des éléments (raidisseurs) de toit, permettant de limiter la déformation des pavillons de toit d'un véhicule automobile et également de réduire les vibrations du véhicule automobile.

Ces éléments raidisseurs de toit sont généralement réalisés à base de carton ondulé (à simple cannelure ou à double cannelure) ou de complexes multicouches à base de polymères (par exemple en polyuréthane) intégrant des feuilles de papier kraft laminées sur les faces interne et/ou externe. A titre d'exemple, les demandes de brevet français FR 3 011 519 et FR 3 012 105 de la demanderesse décrivent des éléments (raidisseurs) de toit réalisés à base de carton ondulé.

Un problème fréquemment rencontré avec ce type de structure concerne une baisse de la stabilité dimensionnelle des éléments raidisseurs lorsqu'ils sont soumis à des conditions variables d'humidité et de température. Les mouvements différentiels (dilatation/retrait) entre l'élément raidisseur de toit et la tôle du toit sur laquelle l'élément raidisseur de toit est collé, engendrent des tensions mécaniques aux interfaces de collage. Ces mouvements peuvent se traduire par des déformations du toit (gonflement, creux, stries, ...) visibles de l'extérieur du véhicule. Ce phénomène est d'autant plus perceptible visuellement que les laques ou peintures recouvrant le toit sont brillantes et tendues.

L'une des explications des déformations de la tôle du toit est liée à l'absorption et à la désorption de vapeur d'eau de la couche externe et/ou de la couche interne de l'élément raidisseur de toit, se produisant lors des cycles climatiques et thermiques auxquels le véhicule peut être soumis tout au long de sa durée de vie. Ce phénomène est d'autant plus accentué que l'élément raidisseur est réalisé dans un matériau très rigide et anisotrope, comme un carton ondulé par exemple.

De nombreuses solutions sont proposées pour pallier ce problème de déformation, et en particulier :
- des découpes spécifiques réalisées dans le carton afin de l'assouplir localement ; et
- un laminage de films étanches sur l'une ou les deux faces de l'élément raidisseur de toit.

A titre d'exemple, les demandes de brevet WO-01/68406 et FR 3 012 105 décrivent des éléments de toit pourvus de découpes permettant de leur conférer une souplesse telle qu'ils puissent, lors de leur application contre un panneau en tôle, s'adapter à la surface galbée de celui-ci sans créer de déformation.

Le document EP 0 341 652 A2 divulgue un élément de toit selon le préambule de la revendication 1.

Ces solutions usuelles présentent toutefois l'inconvénient d'être onéreuses et peuvent toujours engendrer des déformations du toit.

### EXPOSÉ DE L'INVENTION

La présente invention a pour objet de remédier à ces inconvénients, en proposant un élément de toit en carton présentant notamment une stabilité dimensionnelle améliorée.

Pour ce faire, elle concerne un élément (raidisseur) de toit, en particulier un panneau intérieur de plafond pour un toit de véhicule, comportant une pièce principale en carton ondulé et comprenant une couche dite supérieure et une couche dite inférieure.

Selon l'invention, la couche supérieure de l'élément de toit présente une énergie de surface supérieure à 30 mJ/m² (ou mN/m) et la couche inférieure de l'élément de toit présente une énergie de surface inférieure à 20 mJ/m² (ou mN/m).

Ainsi, grâce à l'invention :
- la couche supérieure de l'élément de toit dont l'énergie de surface est élevée (supérieure à 30 mJ/m²) présente un caractère hydrophile permettant de favoriser les échanges de vapeur d'eau entre la pièce principale en carton ondulé et l'environnement extérieur, en particulier lorsque la face supérieure de ladite pièce principale (en carton ondulé) est collée sur une tôle de toit d'un véhicule ; et
- la couche inférieure de l'élément de toit dont l'énergie de surface est faible (inférieure à 20 mJ/m²) présente un caractère hydrophobe limitant les échanges de vapeur d'eau entre la pièce principale en carton ondulé et l'extérieur de la pièce, en particulier l'environnement interne du véhicule lorsque la face inférieure de ladite pièce principale (en carton ondulé) est opposée à celle collée sur la tôle de toit du véhicule.

Ces caractéristiques, peu coûteuses à mettre en oeuvre, permettent d'améliorer la stabilité dimensionnelle de l'élément de toit, car elles participent à gérer favorablement les variations de flux de vapeur d'eau en contact avec la couche supérieure et en contact avec la couche inférieure. Il convient de rappeler que, lors des cycles climatiques et thermiques auxquels le véhicule peut être soumis, la face de l'élément de toit la plus exposée aux variations du taux de vapeur d'eau est, par conception, celle de la couche inférieure. La couche extérieure étant plaquée et fixée sur la tôle du toit, elle reçoit naturellement très peu de vapeur d'eau. La couche inférieure étant hydrophobe (énergie de surface inférieure à 20 mJ/m²), son caractère déperlant fait qu'elle n'absorbe et/ou ne désorbe pas de vapeur d'eau lors des cycles climatiques ; ses dimensions restent suffisamment stables pour ne pas induire de déformations visibles sur le toit. La couche extérieure étant hydrophile (énergie de surface supérieure à 30 mJ/m²), mais peu soumise au contact avec la vapeur d'eau, elle va par conséquent peu absorber et/ou peu désorber de vapeur d'eau lors des cycles climatiques. Les variations dimensionnelles liées aux séquences d'absorption/désorption de vapeur d'eau de la couche extérieure restent suffisamment faibles pour ne pas induire de déformations visibles sur le toit.

Il est également utile de rappeler qu'un élément de toit, tel un raidisseur, fixé sur la tôle de toit d'un véhicule possède une courbure plus ou moins identique à celle de ladite tôle de toit sur laquelle il est fixé. Par conséquent, la couche supérieure dudit raidisseur de toit est convexe, alors que sa couche inférieure est concave. De façon surprenante, cette courbure convexe sur la couche extérieure et concave sur la couche inférieure, combinée avec les propriétés hydrophile et hydrophobe de la couche extérieure et de la couche intérieure, respectivement, contribue à l'obtention d'une stabilité dimensionnelle améliorée de l'élément de toit collé sur le toit d'un véhicule.

Par conséquent, l'élément de toit, tel que décrit ci-dessus, notamment lorsqu'il est utilisé comme panneau intérieur de plafond monté dans un toit d'un véhicule, conserve toutes ses propriétés habituelles dont sa rigidité, et également une stabilité dimensionnelle (améliorée) même lorsqu'il est soumis à des conditions variables d'humidité et de température sur une longue durée.

Dans un mode de réalisation préféré, l'élément de toit présente un module de Young en sens longitudinal et en sens transversal supérieur à 50 000 N/mm² (ou 50 kN/mm²).

En outre, avantageusement :
- la couche supérieure est telle qu'une adhésion d'un ruban adhésif acrylique sur ladite couche supérieure est supérieure à 4 N/cm ; et/ou
- la couche inférieure est telle qu'une adhésion d'un ruban adhésif acrylique sur ladite couche inférieure est inférieure à 0,5 N/cm.

Ces deux caractéristiques techniques sont en cohérence avec l'amélioration de la stabilité dimensionnelle recherchée, comme précisé ci-dessous.

Par ailleurs, de façon avantageuse :
- la couche supérieure correspond à une couverture supérieure de la pièce principale en carton ondulé, ce qui permet de réduire le coût de l'élément de toit ; et/ou
- la couche inférieure est une couche de silicone anti-adhérent.

En outre, dans un mode de réalisation particulier, l'élément de toit est (légèrement) galbé.

Par ailleurs, dans un mode de réalisation préféré, l'élément de toit comporte une couverture adhésive couvrant au moins une partie d'une face dite supérieure de ladite couche supérieure de l'élément de toit. Dans une première réalisation de ce mode de réalisation préféré, la couverture adhésive comporte une pluralité de bandes d'adhésif à double face adhérente, lesdites bandes d'adhésif étant déposées sur ladite face supérieure de la couche supérieure. En outre, dans une seconde réalisation de ce mode de réalisation préféré, la couverture adhésive comporte une couche d'adhésif déposée sur ladite face supérieure de la couche supérieure.

Par ailleurs, dans le cadre de la présente invention, la pièce principale en carton ondulé peut comporter un carton simple cannelure ou un carton double cannelure.

Dans un mode de réalisation particulier, au moins un évidement est pratiqué dans la pièce principale et ladite pièce principale est pourvue d'au moins une pièce amortissante agencée dans ledit évidement de sorte qu'une face supérieure de ladite pièce amortissante affleure une face supérieure de ladite pièce principale.

En outre, dans un mode de réalisation particulier, la pièce principale en carton ondulé comporte des découpes traversant partiellement l'épaisseur de la pièce principale. Ces découpes confèrent une souplesse à la pièce principale. La pièce principale en carton ondulé peut comporter des découpes formées depuis la face supérieure de ladite pièce principale et/ou des découpes formées depuis la face inférieure de ladite pièce principale.

### BRÈVE DESCRIPTION DES FIGURES

D'autres avantages et caractéristiques ressortiront mieux de la description qui va suivre de plusieurs modes de réalisation, donnés à titre d'exemples non limitatifs, de l'élément de toit conforme à l'invention, en se référant notamment aux figures annexées. Sur ces figures, des références identiques désignent des éléments semblables.
La figure 1 est une vue partielle, en perspective, d'un pavillon de toit d'un véhicule automobile pourvu d'un mode de réalisation particulier d'un élément de toit conforme à l'invention.
La figure 2 est une vue schématique, en perspective, d'un mode de réalisation particulier d'un élément de toit.
La figure 3 est une vue partielle schématique, en coupe transversale, d'un premier mode de réalisation de l'élément de toit représenté sur la figure 2.
La figure 4 est une vue partielle schématique, en coupe transversale, d'un deuxième mode de réalisation de l'élément de toit.
La figure 5 est une vue partielle schématique, en coupe transversale, d'un troisième mode de réalisation de l'élément de toit.
La figure 6 est une vue partielle schématique, en coupe transversale, d'un quatrième mode de réalisation de l'élément de toit.
La figure 7 est une vue partielle schématique, en coupe transversale, d'un cinquième mode de réalisation de l'élément de toit.

### DESCRIPTION DÉTAILLÉE

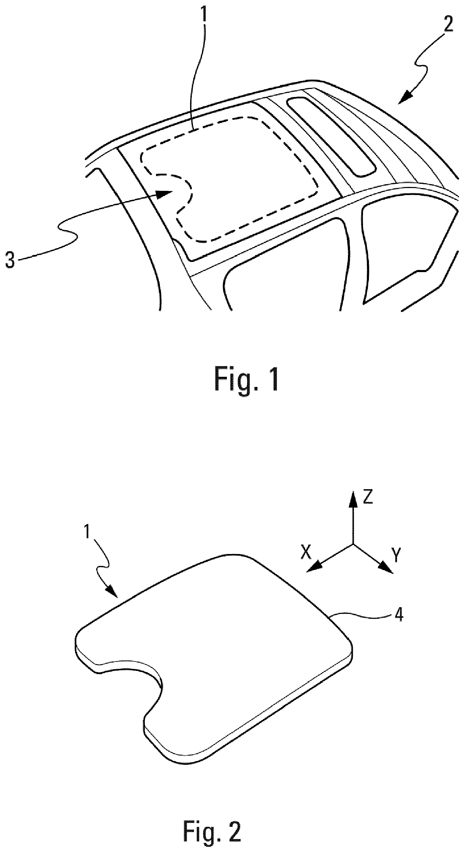

On décrit, ci-après, un élément de toit 1 d'un véhicule automobile 2 (figure 1), et plus particulièrement un panneau intérieur de plafond du véhicule automobile 2. Toutefois, il est bien évident que ledit élément de toit 1 pourra être utilisé pour tout type de véhicule sans pour autant sortir du cadre de l'invention.

La figure 1 est une vue en perspective montrant partiellement la caisse du véhicule automobile 2. Sous le pavillon 3 de toit de cette caisse est agencé l'élément de toit 1, comme représenté en tirets sur ladite figure 1.

Cet élément de toit 1 destiné notamment à améliorer la rigidité du pavillon 3 de toit du véhicule automobile 2 présente, dans l'exemple représenté, une forme générale (en plan) sensiblement rectangulaire. Bien entendu dans le cadre de la présente invention, ledit élément de toit 1 peut présenter toute autre forme possible, par exemple une forme carrée ou une forme quelconque.

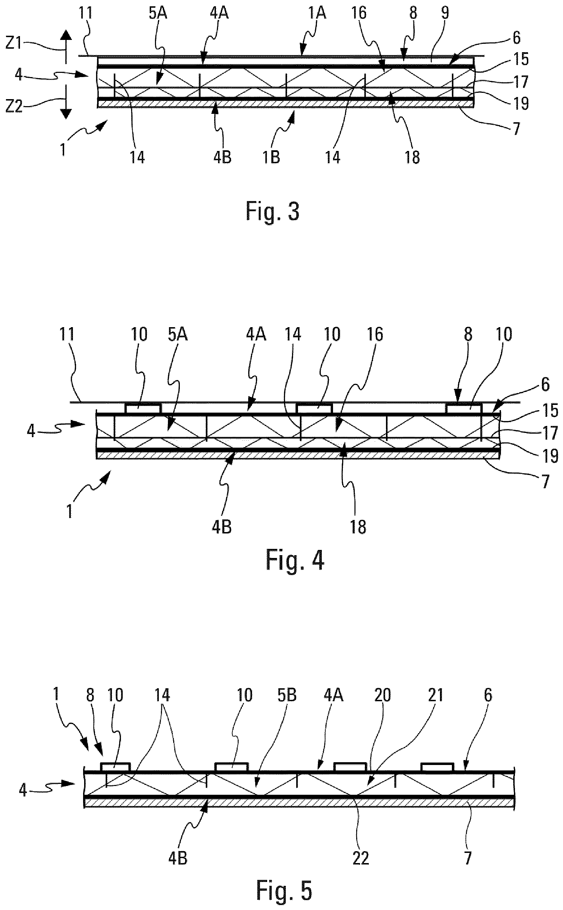

Ledit élément de toit 1 montré schématiquement, en vue en perspective sur la figure 2, comporte une pièce 4 dite principale en carton ondulé 5A, 5B, comme représenté en particulier sur les figures 3 à 7.

Une telle pièce principale 4 en carton ondulé permet, notamment, de rigidifier une structure telle que le pavillon d'un véhicule automobile, tout en présentant un poids faible.

Pour faciliter la description suivante, on a représenté sur la figure 2 un référentiel d'axes X, Y et Z, lié à l'élément de toit 1. Plus particulièrement :
- l'axe X est défini sensiblement vers l'avant du véhicule automobile 2 selon un axe longitudinal de ce véhicule automobile 2, lorsque l'élément de toit 1 est monté sur le véhicule automobile 2 ;
- l'axe Y forme avec l'axe X un plan sensiblement horizontal dans la position montée ; et
- l'axe Z est un axe vertical, orthogonal au plan horizontal X Y.

Dans le cadre de la présente invention, les adjectifs « supérieur », « inférieur », « haut » et « bas » sont définis par rapport à l'axe Z, à savoir « supérieur » et « haut » dans le sens illustré par une flèche Z1 (figure 3), c'est-à-dire vers le haut du véhicule automobile 2 en position montée, et « inférieur » et « bas » dans le sens d'une flèche Z2 (figure 3), opposé à celui de la flèche Z1.

De plus, l'adjectif « longitudinal » s'applique à une pièce ou partie de l'élément de toit 1 orientée selon une direction parallèle à l'axe X, et l'adjectif « transversal » s'applique à une pièce ou partie de l'élément de toit 1 orientée selon une direction parallèle à l'axe Y.

Comme représenté par exemple sur la figure 3, la pièce principale 4 en carton ondulé comporte ainsi une face supérieure 4A et une face inférieure 4B, et l'élément de toit 1 comporte au moins une couche dite supérieure 6 et une couche dite inférieure 7.

Selon l'invention, la couche supérieure 6 de l'élément de toit 1 présente une énergie de surface Es1 supérieure à 30 mJ/m² (ou mN/m) et la couche inférieure 7 de l'élément de toit 1 présente une énergie de surface Es2 inférieure à 20 mJ/m² (ou mN/m). L'énergie de surface est par exemple mesurée, de façon usuelle, selon la méthode de l'angle de contact ou de l'angle de goutte.

Ainsi, grâce à l'invention :
- la couche supérieure 6 de l'élément de toit 1 dont l'énergie de surface Es1 est élevée (supérieure à 30 mJ/m²) présente un caractère hydrophile. Ce caractère hydrophile permet de favoriser les échanges de vapeur d'eau entre la pièce principale 4 en carton ondulé et l'environnement extérieur, en particulier lorsque la face supérieure 4A de ladite pièce principale 4 (en carton ondulé), qui présente le plus grand rayon de courbure, est collée sur une tôle de toit d'un véhicule automobile ; et
- la couche inférieure 7 de l'élément de toit dont l'énergie de surface Es2 est réduite (inférieure à 20 mJ/m²) présente un caractère hydrophobe. Ce caractère hydrophobe limite les échanges de vapeur d'eau entre la pièce principale 4 en carton ondulé et l'extérieur de ladite pièce principale 4, en particulier avec l'environnement interne du véhicule automobile lorsque la face inférieure 4B de ladite pièce principale 4 (en carton ondulé), qui présente le plus petit rayon de courbure, est opposée à celle 4A collée sur la tôle de toit.

Ces caractéristiques, peu coûteuses à mettre en oeuvre, permettent d'améliorer la stabilité dimensionnelle de l'élément de toit 1.

Par conséquent, l'élément de toit 1, tel que décrit ci-dessus, notamment lorsqu'il est utilisé comme panneau intérieur de plafond monté sous le pavillon 3 de toit d'un véhicule automobile 2, conserve toutes ses propriétés habituelles dont sa rigidité, et également sa stabilité dimensionnelle même lorsqu'il est soumis à des conditions variables d'humidité et de température sur une longue durée, par exemple tout au long de la durée de vie du véhicule automobile 2.

Dans un mode de réalisation préféré, l'élément de toit 1 présente également un module de Young en sens longitudinal et en sens transversal supérieur à 50 000 N/mm² (ou 50 kN/mm²).

En outre, de préférence :
- la couche supérieure 6 est telle qu'une adhésion d'un ruban adhésif acrylique sur ladite couche supérieure 6 est supérieure à 4 N/cm ; et
- la couche inférieure 7 est telle qu'une adhésion d'un ruban adhésif acrylique sur ladite couche inférieure 7 est inférieure à 0,5 N/cm.

L'élément de toit 1 présente ainsi un niveau d'adhésion différencié d'un ruban adhésif acrylique collé sur la couche supérieure 6 et sur la couche inférieure 7. On rappellera que l'adhésif d'un ruban adhésif acrylique est polaire.

Ces deux caractéristiques techniques d'adhésion sont en cohérence avec l'amélioration de la stabilité dimensionnelle recherchée, car les molécules de la vapeur d'eau sont polaires, comme l'adhésif d'un ruban adhésif acrylique. Par conséquent, l'affinité physico-chimique de l'adhésif du ruban adhésif acrylique avec la couche supérieure 6 est comparable à celle des molécules d'eau avec la couche supérieure 6, c'est-à-dire élevée. De même, l'affinité physico-chimique de l'adhésif du ruban adhésif acrylique avec la couche inférieure 7 est comparable à celle des molécules d'eau avec la couche inférieure 7, c'est-à-dire faible.

Par ailleurs, dans un mode de réalisation préféré, la couche supérieure 6 correspond à une couverture supérieure 15, 20 (telle que précisée ci-dessous) de la pièce principale 4 en carton ondulé. Ceci permet de réduire le coût de l'élément de toit 1.

Dans une variante de réalisation (non représentée), la couche supérieure 6 peut également être une couche spécifique qui a été rapportée sur la couche supérieure 15, 20 de la pièce principale 4.

En outre, la couche inférieure 7, qui est une couche anti-adhérente et qui est rapportée sur la face inférieure 4A d'une couverture inférieure 19, 22 de ladite pièce principale 4, peut être obtenue dans tout type de matériau anti-adhérent, tel qu'un verni par exemple, qui est tel que son énergie de surface Es2 est inférieure à 20 mJ/m².

Dans un mode de réalisation préféré, la couche inférieure 7 est une couche anti-adhérente correspondant, de préférence, à une couche de silicone photoréticutable. Cette couche de silicone présente, par exemple, une épaisseur comprise entre 0,2 µm et 1 µm, et notamment une épaisseur de 0,5 µm.

Par ailleurs, dans un mode de réalisation préféré, l'élément de toit 1 comprend une couverture adhésive 8 couvrant au moins une partie d'une face dite supérieure de la couche supérieure 6 de l'élément de toit 1. Cette face supérieure de la couche supérieure 6 correspond à la face supérieure 4A de la pièce principale 4 sur les exemples représentés sur les figures. La couverture adhésive 8 permet de fixer l'élément de toit 1, sur un support 11 (tel que représenté schématiquement sur les figures 3 et 4) notamment un panneau de tôle, à savoir sous le pavillon 3 de toit du véhicule automobile 2 dans l'exemple de la figure 1.

Dans le cadre de la présente invention, la couverture adhésive 8 peut être réalisée de différentes manières.

Dans une première réalisation (représentée sur les figures 3, 6 et 7) de ce mode de réalisation préféré, l'élément de toit 1 comporte, comme couverture adhésive 8, une couche d'adhésif 9 qui est déposée sur ladite face supérieure de la couche supérieure 6.

Dans une seconde réalisation (représentée sur les figures 4 et 5) de ce mode de réalisation préféré, l'élément de toit 1 comporte, comme couverture adhésive 8, une pluralité de bandes d'adhésif 10 à double face adhérente (comprenant de l'adhésif sensible à la pression). Lesdites bandes d'adhésif 10 sont déposées sur la face supérieure de la couche supérieure 6.

Dans un exemple de réalisation particulier, lesdites bandes d'adhésif 10 comportent une première couche d'adhésif sensible à la pression, une couche en mousse et une seconde couche d'adhésif sensible à la pression. A titre d'illustration, non limitative, la couche en mousse présente, de préférence, une épaisseur comprise entre 500 et 1100 µm et les couches d'adhésif sensible à la pression présentent une épaisseur comprise entre 50 et 100 µm. Lesdites couches d'adhésif sensible à la pression sont obtenues dans un adhésif acrylique auto-réticulant en phase solvant. De plus, la couche de mousse présente une densité comprise entre 40 kg/m³ et 160 kg/m³ et est obtenue dans de la mousse de polyéthylène à cellules fermées, réticulée physique.

En variante, la couverture adhésive peut comporter des cordons adhésifs à base de copolymères bloc ou de butyle.

Dans ce mode de réalisation préféré (comprenant une couverture adhésive 8), en plus des avantages précités de l'élément de toit 1, les caractéristiques particulières d'énergie de surface (énergie de surface Es2 inférieure à 20 mJ/m²) de la couche inférieure 7 de l'élément de toit 1 permettent un décollement facile d'une couverture adhésive 8 d'une telle couche inférieure 7. De ce fait, il est possible d'empiler directement plusieurs éléments de toit 1 les uns sur les autres avec, à chaque fois, la face supérieure 1A (correspondant à la face supérieure de la couverture adhésive 8) d'un élément de toit 1 qui reçoit la face inférieure 1B (correspondant à la face inférieure de la couche inférieure 7) de l'élément de toit 1 directement posé sur lui.

Il est ainsi possible d'empiler des éléments de toit 1 les uns sur les autres sans protecteur intercalaire. Ceci facilite les manipulations à la pose de l'élément de toit 1 sous le pavillon 3 du véhicule 2, car l'opération de retrait du ou des protecteurs est supprimée. De plus, ceci réduit le nombre de déchets et améliore la sécurité, les protecteurs réalisés notamment en silicone étant très glissants s'ils tombent sur le sol.

L'avantage précité (décollement facile d'une couverture adhésive 8 d'une couche inférieure 7) est soutenu et amplifié par les caractéristiques particulières d'adhésion (adhésion d'un ruban adhésif acrylique inférieure à 0,5 N/cm) de la couche inférieure 7 de l'élément de toit 1.

Dans le cadre de la présente invention, la pièce principale 4 peut être réalisée de différentes manières et/ou peut comporter différents éléments spécifiques et/ou différentes caractéristiques spécifiques.

On décrit ci-après, à titre non limitatif, des modes de réalisation particuliers de la pièce principale 4 en carton ondulé, susceptibles d'être utilisés dans l'élément de toit 1 conforme à la présente invention.

Dans un premier mode de réalisation, représenté notamment sur les figures 3 et 4, la pièce principale 4 comporte un carton ondulé 5A à double cannelure. Ce carton ondulé 5A à double cannelure comprend successivement, du haut vers le bas (c'est-à-dire dans le sens de la flèche Z2 de la figure 3), une couverture supérieure 15, une cannelure supérieure 16, une couverture médiane 17, une cannelure inférieure 18 et une couverture inférieure 19.

Dans l'exemple des figures 3 et 4, le carton ondulé 5A à double cannelure est dit dissymétrique, la cannelure supérieure 16 étant plus grande que la cannelure inférieure 18.

De manière usuelle, le collage des différentes couches du carton ondulé 5A à double cannelure est réalisé à l'amidon. De préférence, le poids surfacique total moyen du carton ondulé est de 1090 g/m² selon la norme Q 03-031 pour une épaisseur moyenne de 7 mm mesurée selon la norme Q 03-010. A titre d'illustration non limitative, le carton ondulé 5A à double cannelure dissymétrique comprend la couverture supérieure 15 en Kraftliner de poids moyen compris entre 200 et 225 g/m², la cannelure supérieure 16 dite mi-chimique de poids moyen compris entre 140 et 160 g/m², la couverture médiane 17 en Kraftliner de poids moyen compris entre 175 et 200 g/m², la cannelure inférieure 18 mi-chimique de poids moyen compris entre 140 et 160 g/m² et la couverture inférieure 19 en Kraftliner de poids moyen compris entre 200 et 225 g/m².

Par ailleurs, dans un second mode de réalisation représenté sur la figure 5, la pièce principale 4 comporte du carton ondulé 5B à simple cannelure. Ce carton ondulé 5B à simple cannelure comporte, successivement du haut vers le bas, une couverture supérieure 20, une cannelure 21 et une couverture inférieure 22. A titre d'illustration, non limitative, ledit carton ondulé 5B à simple cannelure présente une épaisseur comprise entre 2 et 6 mm, un coefficient d'ondulation compris entre 1,35 et 1,70, 120 à 180 cannelures au mètre, et la somme des grammages de la couverture supérieure 20 et de la couverture inférieure 22 est comprise entre 200 et 635 g/m².

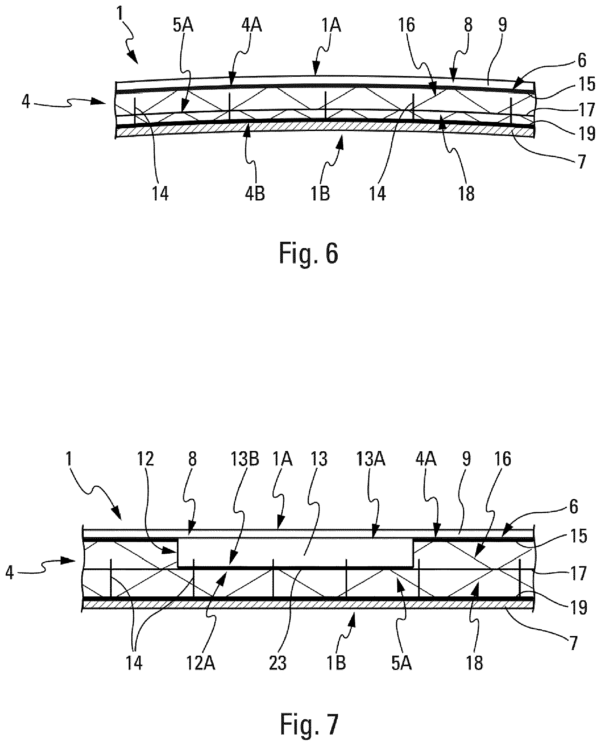

Dans le mode de réalisation des figures 3 à 5, l'élément de toit 1 est sensiblement plat. En outre, dans un mode de réalisation particulier, représenté sur la figure 6, la pièce principale 4 et ainsi l'élément de toit 1 sont (légèrement) galbés permettant ainsi de s'approcher de la forme généralement galbée du panneau de tôle 11 du pavillon 3 du véhicule automobile 2, auquel l'élément de toit 1 est collé.

Par ailleurs, dans un mode de réalisation particulier, représenté sur les figures 3 à 7, la pièce principale 4 en carton ondulé 5A, 5B comporte des découpes 14 traversant partiellement l'épaisseur de ladite pièce principale 4. Comme précisé ci-dessous, la pièce principale 4 en carton ondulé 5A, 5B peut comporter des découpes 14 formées depuis la face supérieure 4A de ladite pièce principale 4 (figures 4 et 5) ou des découpes formées depuis la face inférieure 4B de ladite pièce principale 4 (figures 3, 6 et 7).

En variante (non représentée), il est également envisageable de prévoir une pièce principale comprenant, à la fois, des découpes formées depuis la face supérieure de ladite pièce principale et des découpes formées depuis la face inférieure de ladite pièce principale.

Ces découpes 14 permettent un pliage plus aisé de l'élément de toit 1 en vue d'une adaptation de forme lors de sa mise en place.

De préférence, les découpes 14 sont parallèles entre elles et elles s'étendent parallèlement aux cannelures du carton ondulé 5A, 5B. Les découpes 14 étant formées dans une partie de l'épaisseur de la pièce principale 4, elles peuvent, dans le cas d'un carton ondulé 5A à double cannelure, être pratiquées dans une seule cannelure ou bien traverser complètement l'une des cannelures, la couverture médiane et partiellement l'autre cannelure (figures 3, 4, 6 et 7).

Ces découpes 14 confèrent à la pièce principale 4 et ainsi à l'élément de toit 1 une souplesse telle que l'élément de toit 1 peut, lors de son application contre le panneau de tôle 11 du pavillon 3 du véhicule 2, s'adapter à la surface galbée de ce dernier sans créer de déformation.

Par ailleurs, dans un mode de réalisation particulier (non représenté), on réalise, sur les deux faces ou sur une face de la pièce principale, de préférence sur la face supérieure, deux séries de découpes, l'une de ces séries étant orientée dans le sens de la longueur de la pièce principale (c'est-à-dire selon l'axe X) et l'autre série étant orientée dans le sens de la largeur de la pièce principale (c'est-à-dire selon l'axe Y). Dans ce cas, la pièce principale (et ainsi l'élément de toit) est souple dans les deux sens et par conséquent, lors de sa pose, il épouse parfaitement la concavité du panneau en tôle 11 du pavillon 3 dans le sens de sa longueur et de sa largeur, sans engendrer de déformation de la tôle, ni de détachement de l'élément de toit 1.

En outre, dans un mode de réalisation particulier, représenté sur la figure 7, un évidement (ou creux) 12 est pratiqué dans la pièce principale 4. De plus, ladite pièce principale 4 est pourvue d'au moins une pièce amortissante 13 agencée dans ledit évidement 12 de sorte qu'une face supérieure 13A de ladite pièce amortissante 13 affleure la face supérieure 4A de ladite pièce principale 4.

De préférence, la pièce amortissante 13 présente un grammage surfacique compris entre 6 et 15 kg/m² et est réalisée dans une plaque de masse lourde bitumeuse dite IFF selon l'acronyme « Insonorisant Fusible en Feuille », qui peut avantageusement comporter des charges minérales et/ou des charges magnétiques.

La pièce principale 4 peut comporter une ou plusieurs pièces amortissantes 13 de ce type.

De plus, l'élément de toit 1 comporte également une ou plusieurs bandes d'adhésif 23 à double face adhérente (comprenant de l'adhésif sensible à la pression). La ou les bandes d'adhésif 23 sont déposées en contact, d'une part, du fond 12A dudit évidement 12, et d'autre part, d'une face inférieure 13B de ladite pièce amortissante 13 en regard dudit fond 12A. Cette ou ces bandes d'adhésif 23 permettent de solidariser la pièce amortissante 13 de la pièce principale 4.

De préférence, l'évidement 12 est formé dans la pièce principale 4 par une découpe dans l'épaisseur de cette dernière et par un écrasement de la partie découpée. La découpe dans la ou les cannelures de la pièce principale 4 est réalisée par tout moyen de découpe approprié bien connu de l'homme du métier.

Dans l'exemple de la figure 7, l'évidement 12 est uniquement réalisé dans la cannelure supérieure 16 du carton ondulé 5A à double cannelure. Toutefois, en variante, l'évidement peut également être prévu, au moins en partie, dans la cannelure inférieure 18.

L'élément de toit 1 est également pourvu d'une couverture adhésive 8, à savoir une couche d'adhésif 9 dans l'exemple de la figure 7, qui recouvre la face supérieure 13A de ladite pièce amortissante 13 et la face supérieure 4A de la pièce principale 4.

Ce mode de réalisation à pièce amortissante peut bien entendu également être appliqué à un élément de toit pourvu d'un carton ondulé 5B à simple cannelure.

On notera que les découpes 14 (si elles sont prévues dans la pièce principale 4) peuvent également traverser partiellement la pièce amortissante 13 comme représenté sur la figure 7, sans pour autant sortir du cadre de l'invention.

Il est bien évident que les exemples présentés ci-dessus ne sont que des illustrations particulières, en aucun cas limitatives quant aux domaines d'application de la présente invention. De plus, des caractéristiques de certains de ces exemples différents peuvent être combinées entre elles si cela est approprié, sans sortir du cadre de la présente invention.

## Revendications

1. Elément de toit, en particulier panneau intérieur de plafond pour un toit de véhicule, ledit élément de toit (1) comportant une pièce principale (4) en carton ondulé (5A, 5B) et comprenant une couche dite supérieure (6) et une couche dite inférieure (7), **caractérisé en ce que** :
- ladite couche supérieure (6) présente une énergie de surface supérieure à 30 mJ/m² ; et
- ladite couche inférieure (7) présente une énergie de surface inférieure à 20 mJ/m².

2. Elément de toit selon la revendication 1,
**caractérisé en ce qu'**il présente un module de Young en sens longitudinal et en sens transversal supérieur à 50 000 N/mm².

3. Elément de toit selon l'une des revendications 1 et 2,
**caractérisé en ce que** la couche supérieure (6) est telle qu'une adhésion d'un ruban adhésif acrylique sur ladite couche supérieure (6) est supérieure à 4 N/cm.

4. Elément de toit selon l'une quelconque des revendications précédentes, **caractérisé en ce que** la couche inférieure (7) est telle qu'une adhésion d'un ruban adhésif acrylique sur ladite couche inférieure (7) est inférieure à 0,5 N/cm.

5. Elément de toit selon l'une quelconque des revendications précédentes, **caractérisé en ce que** la couche supérieure (6) correspond à une couverture supérieure (15, 20) de la pièce principale (4) en carton ondulé (5A, 5B).

6. Elément de toit selon l'une quelconque des revendications précédentes, **caractérisé en ce que** la couche inférieure (7) est une couche de silicone anti-adhérent.

7. Elément de toit selon l'une quelconque des revendications précédentes, **caractérisé en ce qu'**il comporte une couverture adhésive (8) couvrant au moins une partie d'une face dite supérieure (4A) de ladite couche supérieure (6) de l'élément de toit (1).

8. Elément de toit selon la revendication 7,
**caractérisé en ce que** la couverture adhésive (8) comporte une pluralité de bandes d'adhésif (10) à double face adhérente, lesdites bandes d'adhésif (10) étant déposées sur ladite face supérieure (4A) de la couche supérieure (6).

9. Elément de toit selon la revendication 7,
**caractérisé en ce que** la couverture adhésive (8) comporte une couche d'adhésif (9) déposée sur ladite face supérieure (4A) de la couche supérieure (6).

10. Elément de toit selon l'une quelconque des revendications précédentes, **caractérisé en ce qu'**il est galbé.

11. Elément de toit selon l'une quelconque des revendications 1 à 10, **caractérisé en ce que** la pièce principale (4) en carton ondulé est pourvue d'un carton simple cannelure (5B).

12. Elément de toit selon l'une quelconque des revendications 1 à 10, **caractérisé en ce que** la pièce principale (4) en carton ondulé est pourvue d'un carton double cannelure (5A).

13. Elément de toit selon l'une quelconque des revendications précédentes, **caractérisé en ce qu'**au moins un évidement (12) est pratiqué dans la pièce principale (4) et **en ce que** ladite pièce principale (4) est pourvue d'au moins une pièce amortissante (13) agencée dans ledit évidement (12) de sorte qu'une face supérieure (13A) de ladite pièce amortissante (13) affleure une face supérieure (4A) de ladite pièce principale (4).

14. Elément de toit selon l'une quelconque des revendications précédentes, **caractérisé en ce que** la pièce principale (4) en carton ondulé (5A, 5B) comporte des découpes (14) traversant partiellement l'épaisseur de la pièce principale (4), lesdites découpes (14) étant formées depuis au moins l'une des faces (4A, 4B) de ladite pièce principale (4) en carton ondulé (5A, 5B).

## Patentansprüche

1. Dachelement, insbesondere Dachhimmelinnenplatte für ein Fahrzeugdach, wobei das Dachelement (1) ein Hauptstück (4) aus Wellpappe (5A, 5B) umfasst, und eine sogenannte Oberschicht (6) und eine sogenannte Unterschicht (7) umfasst,
**dadurch gekennzeichnet, dass**:
- die Oberschicht (6) eine Oberflächenenergie von mehr als 30 mJ/m² aufweist; und
- die Unterschicht (7) eine Oberflächenenergie von weniger als 20 mJ/m² aufweist.

2. Dachelement nach Anspruch 1,
**dadurch gekennzeichnet, dass** es ein Elastizitätsmodul in Längsrichtung und in Querrichtung von mehr als 50.000 N/mm² aufweist.

3. Dachelement nach einem der Ansprüche 1 und 2,
**dadurch gekennzeichnet, dass** die Oberschicht (6) derart ist, dass eine Haftfähigkeit eines Acryl-Klebebandes auf der Oberschicht (6) größer als 4 N/cm ist.

4. Dachelement nach einem der vorstehenden Ansprüche,
**dadurch gekennzeichnet, dass** die Unterschicht (7) derart ist, dass eine Haftfähigkeit eines Acryl-Klebebandes auf der Unterschicht (7) kleiner als 0,5 N/cm ist.

5. Dachelement nach einem der vorstehenden Ansprüche,
**dadurch gekennzeichnet, dass** die Oberschicht (6) einer oberen Abdeckung (15, 20) des Hauptstücks (4) aus Wellpappe (5A, 5B) entspricht.

6. Dachelement nach einem der vorstehenden Ansprüche,
**dadurch gekennzeichnet, dass** die Unterschicht (7) eine Antihaft-Silikonschicht ist.

7. Dachelement nach einem der vorstehenden Ansprüche,
**dadurch gekennzeichnet, dass** es eine haftende Abdeckung (8) umfasst, die mindestens einen Teil einer sogenannten Oberseite (4A) der Oberschicht (6) des Dachelements (1) abdeckt.

8. Dachelement nach Anspruch 7,
**dadurch gekennzeichnet, dass** die haftende Abdeckung (8) eine Vielzahl von doppelseitig haftenden Haftmittelbändern (10) umfasst, wobei die Haftmittelbänder (10) auf der Oberseite (4A) der Oberschicht (6) angeordnet sind.

9. Dachelement nach Anspruch 7,
**dadurch gekennzeichnet, dass** die haftende Abdeckung (8) eine Haftmittelschicht (9) umfasst, die auf der Oberseite (4A) der Oberschicht (6) abgeschieden ist.

10. Dachelement nach einem der vorstehenden Ansprüche,
**dadurch gekennzeichnet, dass** es geschwungen ist.

11. Dachelement nach einem der Ansprüche 1 bis 10,
**dadurch gekennzeichnet, dass** das Hauptstück (4) aus Wellpappe mit einer einwelligen Pappe (5B) versehen ist.

12. Dachelement nach einem der Ansprüche 1 bis 10,
**dadurch gekennzeichnet, dass** das Hauptstück (4) aus Wellpappe mit einer doppelwelligen Pappe (5A) versehen ist.

13. Dachelement nach einem der vorstehenden Ansprüche,
**dadurch gekennzeichnet, dass** mindestens eine Aussparung (12) in dem Hauptstück (4) eingearbeitet ist, und dadurch, dass das Hauptstück (4) mit mindestens einem Dämpfungsstück (13) versehen ist, das in der Aussparung (12) angeordnet ist, sodass eine Oberseite (13A) des Dämpfungsstücks (13) mit einer Oberseite (4A) des Hauptstücks (4) bündig ist.

14. Dachelement nach einem der vorstehenden Ansprüche,
**dadurch gekennzeichnet, dass** das Hauptstück (4) aus Wellpappe (5A, 5B) Ausschnitte (14) umfasst, die teilweise durch die Dicke des Hauptstücks (4) führen, wobei die Ausschnitte (14) ausgehend von mindestens einer der Seiten (4A, 4B) des Hauptstücks (4) aus Wellpappe (5A, 5B) gebildet sind.

## Claims

1. A roof element, in particular, an inner ceiling panel for a vehicle roof, said roof element (1) comprising a main part (4) of corrugated cardboard (5A, 5B) and comprising a so-called upper layer (6) and a so-called lower layer (7),
**characterized in that**:
- said upper layer (6) has a surface energy greater than 30 mJ/m²; and
- said lower layer (7) has a surface energy of less than 20 mJ/m².

2. The roof element according to claim 1,
**characterised in that** it has a Young's modulus in the longitudinal and transverse directions of more than 50,000 N/mm².

3. The roof element according to one of claims 1 and 2,
**characterised in that** the upper layer (6) is such that an adhesion of an acrylic adhesive tape to said upper layer (6) is greater than 4 N/cm.

4. The roof element according to any one of the preceding claims,
**characterized in that** the lower layer (7) is such that an adhesion of an acrylic adhesive tape to said lower layer (7) is less than 0.5 N/cm.

5. The roof element according to any one of the preceding claims,
**characterized in that** the upper layer (6) corresponds to an upper cover (15, 20) of the main part (4) of corrugated cardboard (5A, 5B).

6. The roof element according to any one of the preceding claims,
**characterized in that** the lower layer (7) is a non-stick silicone layer.

7. The roof element according to any one of the preceding claims,
**characterized in that** it comprises an adhesive cover (8) covering at least a portion of a so-called upper side (4A) of said upper layer (6) of the roof element (1).

8. The roof element according to claim 7,
**characterized in that** the adhesive cover (8) comprises a plurality of double-sided adhesive strips (10) adhering to each other, said adhesive strips (10) being deposited on said upper side (4A) of the upper layer (6).

9. The roof element according to claim 7,
**characterised in that** the adhesive cover (8) comprises a layer of adhesive (9) deposited on said upper side (4A) of the upper layer (6).

10. The roof element according to any one of the preceding claims,
**characterized in that** it is curved.

11. The roof element according to any one of the claims 1 to 10,
**characterised in that** the main part (4) of corrugated cardboard is provided with a single fluted cardboard (5B).

12. The roof element according to any one of the claims 1 to 10,
**characterized in that** the main part (4) of corrugated cardboard is provided with a double fluted board (5A).

13. The roof element according to any one of the preceding claims,
**characterized in that** at least one recess (12) is made in the main part (4) and **in that** said main part (4) is provided with at least one damping part (13) arranged in said recess (12) so that an upper side (13A) of said damping part (13) is flush with an upper side (4A) of said main part (4).

14. The roof element according to any one of the preceding claims,
**characterized in that** the main part (4) of corrugated cardboard (5A, 5B) comprises cut-outs (14) partially crossing the thickness of the main part (4), said cut-outs (14) being formed from at least one of the sides (4A, 4B) of said main part (4) of corrugated cardboard (5A, 5B).
